# EUROPEAN PATENT SPECIFICATION

(11) **EP 1 316 811 B1**
(45) Date of publication and mention of the grant of the patent: **25.07.2012**
(21) Application number: 02026186.3
(22) Date of filing: 25.11.2002
(51) Int. Cl.: H04K 1/02, H04K 3/00, H04B 1/7075

(54) **Staggered pulse acquisition method and apparatus**
Verfahren und Anordnung zur Erfassung von gestaffelten Impulsen
Méthode et appareil pour l'acquisition d'impulsions décalées

(43) Date of publication of application: 04.06.2003
(73) Proprietor: Exelis Inc., McLean, VA 22102 (US)
(72) Inventor: Cangiani, Gene L., Parsippany, NJ 07054 (US); Clark, James M., Verona, NJ 07044 (US); Brodie, Peter M., Oakland, NJ 07436 (US); McCrady, Dennis, Holmdel, NJ 07733 (US)
(74) Representative: Dreiss

(56) References cited:
- EP-A- 0 397 527
- US-A- 4 049 953
- US-A- 4 638 357
- US-A- 5 535 278
- US-A- 5 822 429
- PATENT ABSTRACTS OF JAPAN vol. 1999, no. 08, 30 June 1999 (1999-06-30) & JP 11 074873 A (SONY CORP), 16 March 1999 (1999-03-16)

## Description

### Field of the Invention

The present invention relates to data communication systems and, more particularly, to data communication systems transmitting and receiving signals in the presence of unintentional background noise or intentional interference.

### Description of the Related Art

The ability to detect and acquire low level communications, navigation, or radar signals in the presence of unintentional background noise or intentional interference (jamming) has been and continues to be a critical requirement for numerous military and civilian systems.

Traditional solutions include increasing the transmitted signal power, sometimes adaptively, to allow operation with various levels of interference. One such application is for the next generation of the Global Positioning System (GPS). The military community requires additional anti-jam (A/J) capability for the GPS military signal in theaters or areas of responsibility (AORs) during times of conflict. One proposal that has been submitted to achieve this capability is to configure the GPS satellites with large, steerable dish antennas that can direct high power spot beams into an AOR.

Another solution, for synchronous communications systems, is to increase the signal power in short bursts with duty cycles that are of the order of the reciprocal of the power increase. With this scheme, the average power is not increased and, since the system is synchronous, the receiver can anticipate when the bursts, or pulses, will occur. If the receiver is only trying to acquire the signal during the occurrence of a pulse (or pulses), then the resistance to interference is improved by the amount of the instantaneous power increase.

However, the brute force technique of raising the average power to counteract interference or jamming generally is expensive and is limited by the power resources available at the transmitter. The proposal to increase power in a selected geographical area via spot beams for the next generation of GPS is extremely expensive, in terms of cost, operational complexity, and size, weight and power of the required satellite equipment.

The pulsed power technique discussed above is an elegant solution, but it requires synchronous operation. The receiver must have its internal clock synchronized with the transmitter's clock, in order to be able to anticipate the occurrence of the high power signal pulses. If the receiver cannot predict when the pulses will occur, then the receiver will continuously attempt to acquire the signal. Accordingly, no advantage will be realized from the pulsing technique, because the total signal energy in the receiver's acquisition window will be the same as without pulsing. Also, if the power is pulsed at a regular rate, a jammer can pulse the jamming power at nearly the same rate so that periodically the jamming pulses will synchronize with the signal pulses at the receiver, giving an advantage to the jammer to at least periodically block the signal.

Accordingly, there is a need for a system that increases the signal power in short bursts but that does not require synchronous operation.

US patent application US5822429 discloses a method of transmitting a signal, comprising switching between two different polarization states, at time intervals whose duration is controlled by a cryptographic sequence that is known to the transmitter and the receiver of the signal.

### SUMMARY OF THE INVENTION

Therefore, in light of the above, and for other reasons that will become apparent when the invention is fully described, an object of the present invention is to extend the pulsed power technique to non-synchronous systems.

Another object is to reduce the power requirements of a transmitter, such as a transmitter in a GPS satellite that transmits a signal such as a GPS signal.

Still another object is to avoid the need to configure satellites transmitting the signal with steerable antennas.

The aforesaid objects are achieved individually and in combination by the independent claims, and it is not intended that the invention be construed as requiring two or more of the objects to be combined unless expressly required by the claims attached hereto.

In accordance with the certain aspects of the invention, high power pulses are staggered in time such that the length of the time intervals between pulses are known to the receiver, so that the receiver can utilize this knowledge to reliably acquire the signal, without time synchronization. The duration of the time intervals between the high power pulses can be cryptographically controlled using a cryptographic key known to both the transmitter and the receiver, so that authorized receivers are given an advantage.

The acquisition strategy for the receiver is to configure the correlators to detect only the high-power portions of the code, ignoring the low-power portions. The tracking strategy is to switch the gain level to follow the anticipated power profile, providing separate weighting of the two components of the received signal. (In a typical receiver, the acquisition mode allows the receiver to discover the correct signal timing, and the tracking mode allows the receiver to follow any drift of the timing.)

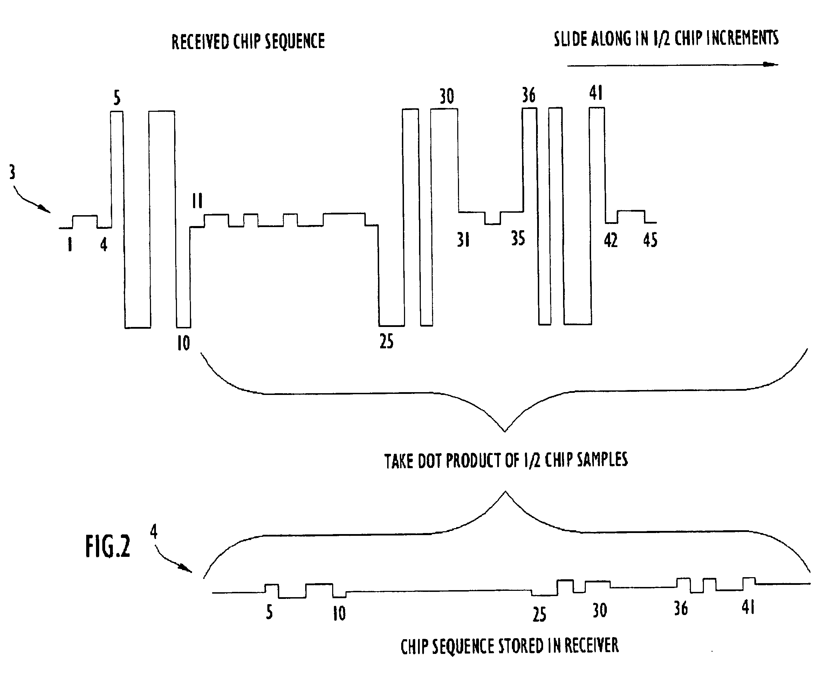

The rationale for this strategy is as follows. The tracking portion of a receiver typically needs only a few correlators (generally with on-time, early, and late phases); so that giving some weight even to the low-power portions of the signal can be afforded. However, the acquisition portion of the receiver typically needs as many parallel correlators as can be afforded, to allow searching for the correct timing as quickly as possible. Giving zero weight to (ignoring) the low-power portions of the signal (as illustrated by the bottom half of Fig. 2) reduces the amount of processing, allowing more correlators for the same cost.

The above and still further objects, features and advantages of the invention will become apparent upon consideration of the following descriptions and descriptive figures of specific embodiments thereof. While these descriptions go into specific details of the invention, it should be understood that variations may and do exist and would be apparent to those skilled in the art based on the descriptions herein.

### BRIEF DESCRIPTION OF THE DRAWINGS

- Fig. 1: shows a conventional received signal and operation of a conventional correlation receiver.
- Fig. 2: shows a staggered pulse signal according to aspects of the present invention and operation of a receiver used to acquire the staggered pulse signal.
- Figs. 3A and B: are block diagrams of exemplary transmitters having an amplifier that boosts certain chips of a pseudonoise (PN) code according to a cryptographic algorithm and outputs a sequence of staggered high-power chips forming a power pulse.
- Fig. 4A: is a block diagram of an exemplary receiver configured to operate in a tracking mode to track the staggered high-power chips output from the transmitter.
- Fig. 4B: is a block diagram of another exemplary receiver configured operate in an acquisition mode to receive and acquire code having the staggered high-power chips output from the transmitter.
- Fig. 5A: is a block diagram of a matched-filter style of coherent correlator, correlating over one power pulse.
- Fig. 5B: is a block diagram of a parallel-active style of coherent correlator, correlating over one power pulse.
- Fig. 6A: shows a matched-filter style of a partially coherent correlator which can correlate multiple power pulses. The correlator in Fig. 6A employs a series of the matched-filter style coherent correlators shown in Fig. 5A.
- Fig. 6B: shows an active-parallel style of a partially coherent correlator which can correlate multiple power pulses. The correlator in Fig. 6B employs a series of the parallel-active style coherent correlators shown in Fig. 5B.

### DETAILED DESCRIPTION

Preferred embodiments according to the present invention are described below with reference to the above drawings, in which like reference numerals designate like components.

### Operation

To achieve the advantages of using high-powered pulses without requiring a receiver to operate synchronously with a transmitter, a new signal has been developed. In that new signal, groups of high-power pulses are staggered in time such that the duration of time intervals between the groups of pulses vary and are known to the receiver. This allows the receiver to utilize that knowledge to reliably acquire the signal, without time synchronization. The length of the time intervals between the groups of high power pulses can be cryptographically controlled using a cryptographic key known to both the transmitter and the receiver.

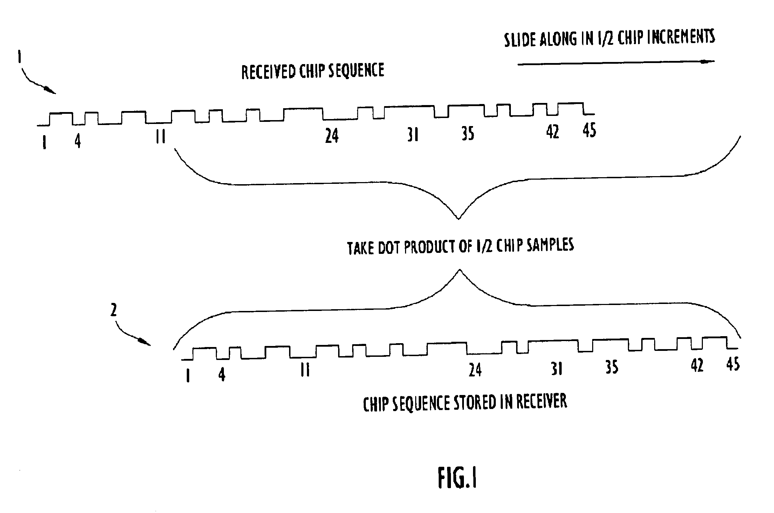

For a code division multiple access (CDMA) signal structure, a conventional correlation receiver operates as depicted in Fig. 1. A 45-chip segment of a code 1 that the receiver attempts to acquire is shown in Fig.1. The code (chip sequence) is stored in the receiver, usually 2 samples per chip, shown in Fig. 1 as code 2. The receiver compares the received signal with the stored code 2. The comparison can be accomplished by correlating the received signal with the stored code 2 by taking the dot product of the stored sequence with a corresponding length of incoming signal. Then, on every succeeding time sample (2 chip), the incoming signal is shifted by one sample and a new dot product is formed. When the shifted incoming signal aligns (within 2 chip) with the stored code 2, the output of the correlator, that is, the value of the dot product, will be much higher than at other times. The amount by which the correlation peak exceeds the non-peak values depends on the length of the correlator and on the correlation properties of the particular code that is being used. The signal is deemed acquired when the correlator output exceeds a pre-determined threshold.

To illustrate the operation of pulse acquisition according to an aspect of the present invention, consider the same code sequence that was utilized in the above example, with the signal power boosted for short intervals creating pulses that include a plurality of chips with a boosted signal power, as depicted by code 3 in Fig. 2. For example, the amplitude of the pulses can be raised by the inverse of the average duty cycle. Such a technique maintains the same average signal power, although other techniques can be used to boost the signal power.

The chip sequences during the period of high power pulses, as well as the staggered time intervals between the high power pulses, are known to the receiver. For a military application, the inter-pulse intervals and the specific chip sequences could be cryptographically generated and therefore could be reproduced only by authorized users. As depicted in Fig. 2, the receiver compares the received signal containing high power pulses with the stored code 4. The comparison can be accomplished by correlating the received signal with the stored code 4 by taking the dot product of the stored sequence with a corresponding length of incoming signal. Then on every succeeding time sample (2 chip), the incoming signal is shifted by one sample and a new dot product is formed. When the shifted incoming signal aligns (within 2 chip) with the stored code 4, the output of the correlator, that is, the value of the dot product, will be much higher than at other times. Here, unlike the conventional systems, only the chip values that are transmitted with high power participate in the dot product. When the correlation process sums over the high power chips and ignores the low power chips, processing gain and the resultant acquisition performance (interference and jamming immunity) is improved significantly.

### Staggered Pulse Transmitter

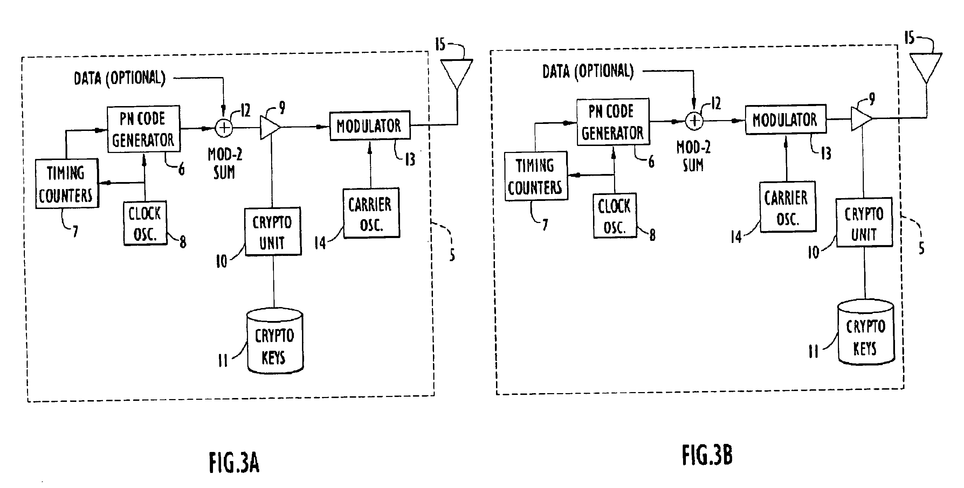

A spread-spectrum communications transmitter 5, such as a transmitter that can be employed in a GPS satellite, is shown in Fig. 3A, configured to produce high power pulses by boosting certain chips in a sequence of chips generated according to a pseudonoise (PN) code. The transmitter of Fig. 3A includes a PN code generator 6 that is controlled by timing counters 7 and both are driven based on a clock oscillator 8. The PN code generator 6 outputs a sequence of chips according to a PN code that the generator is configured to generate. An amplifier 9 boosts the power level of certain chips in the sequence output from the PN code generator 6. A cryptographic unit 10 may control the time interval over which the amplifier operates to boost chips in the PN sequence. The cryptographic unit, using a predetermined cryptographic algorithm and cryptographic keys stored in cryptographic storage unit 11, determines the length of an interval of time between a group of boosted chips. According to the cryptographic algorithm and keys used by the cryptographic unit 10, the cryptographic unit 10 controls the amplifier to boost the power level of the PN code chips above a nominal transmission value for a period of time. After that period of time elapses the cryptographic unit 10 controls the amplifier so that it does not boost the power level for another period of time. The cryptographic unit 10 can determine, based on the cryptographic algorithm and keys in use, the time intervals over which the chips are to be boosted or not boosted.

The output of amplifier 9 is a sequence of PN code chips having groups of sequential chips with a high power level separated by groups of chips with a low power level. For example, Fig. 2 shows an example PN code sequence output from amplifier 9. Here, a first group of PN code chips, numbered 1 through 4, are not boosted. This first group of chips corresponds to an interval of time in which the cryptographic unit 10 controls the amplifier 9 to not boost the power level of the chips. A second group of chips, corresponding to an interval of time in which the cryptographic unit 10 controls the amplifier 9 to boost the power level of the PN code chips, is shown by chip numbers 5 through 10. PN code chips numbered 11 through 24 span a third interval of non-boosted chips. A fourth interval includes boosted chips 25 through 30, and a fifth interval includes non-boosted chips 31 through 35. As can been seen in Fig. 2 the intervals of time for the groups of non-boosted chips vary in length. The variations in length follow a cryptographic pattern according to the cryptographic algorithm and keys in use by the cryptographic unit 10.

Returning to Fig. 3A, the boosted and non-boosted PN code chips output from amplifier 9 are modulated with a carrier signal via modulator 13 which is driven by carrier oscillator 14. Alternatively, the amplifier 9 can be configured, as shown in Fig. 3B, to receive the output of the modulator 13 and amplify the modulated signal. In this instance the modulator 13 operates on a fixed signal amplitude.

Optionally, data can be superimposed onto the code and carrier by using a modulo 2 adder 12 that adds data to the signal output from PN code generator 6. The transmitter 5 transmits the modulated carrier via antenna 15 thereby outputting a carrier wave modulated to carry the boosted and non-boosted PN code chips. That transmitted signal is intelligible to a receiver that has a computer-controlled correlator for detecting the sequences of high-power PN code chips based on the intervals between the groups of high power chips that follow a cryptographical pattern.

### Staggered Pulse Receiver

Note that Fig. 2 shows a functional description of the process of acquiring a staggered pulse signal. It will be appreciated that an ordinarily skilled artisan would understand that there are many efficient ways to implement receiver to acquire such a staggered pulse signal.

A typical receiver has an acquisition mode that enables it to discover the correct signal timing, and a tracking mode that enables it to follow any drift of the timing. Both modes use mostly the same resources of the receiver, except for the correlators. The tracking mode typically needs only a few correlators (generally with on-time, early, and late phases). However, the acquisition mode typically needs as many parallel correlators as can be afforded, to allow searching for the correct timing as quickly as possible.

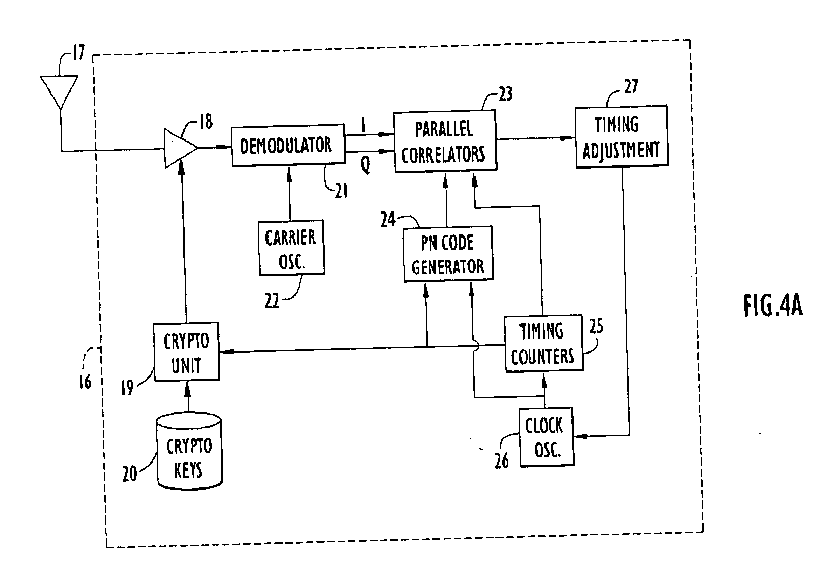

An example of a receiver configured to operate in the tracking mode is shown in Fig. 4A. Here, a receiver 16 receives the transmitted signal via an antenna 17 that provides the received signal to a gain controller 18, such as an amplifier. The gain controller 18 is controlled by a cryptographical unit 19 that is connected to a cryptographical storage unit 20 for storing cryptographical keys. The cryptographical unit 19 and cryptographical storage unit 20 correspond to the cryptographical unit 10 and cryptographical storage unit 11, respectively, of the transmitter. The output of the gain controller 18 is applied to a demodulator 21 that is driven by a carrier oscillator 22, and produces two signals out-of-phase by 90° that are provided to a group of parallel correlators 23. Those two signals are designated as in-phase (I) and quadrature (Q) signals. The parallel correlators can include as many or as few correlators as required to track the incoming signal. Multiple parallel correlators 20 can be used to correlate multiple phases of the signals, such as the early and late phases of the signal.

The parallel correlators 23 are provided with PN reference codes that correspond to the PN codes generated in the transmitter. PN code generator 24 generates the reference codes. The reference codes can be delayed to correspond to the various phases to be tested. Alternatively, the input signals, here the I and Q signals, can be delayed with various delays and correlated with a single PN code to test the different phases.

The PN code generator 24 is driven by a local clock oscillator 25 and timing counters 26 which can produce the different timings for the PN reference codes. The local clock oscillator also drives timing counters 26. The clock oscillator 25 is controlled by an output of a timing adjustment unit 27 that generates a timing adjustment signal based on the output of the correlators 23. For example, the difference of the strength of the early and late correlators can be used to adjust the timing, assuming that the timing error is small.

In the receiver shown in Fig. 4A the cryptographical unit 19 generates a sequence based on an algorithm and a key from the cryptographic storage unit 20 that correspond to the algorithm and key used by the transmitter 5 for use in decoding the sequence of pulses. The tracking mode operation is performed as in a conventional tracking receiver although with a cryptographically controlled gain added as shown in Fig. 4A. It is noted that the time tracking loop is shown in Fig. 4A, but not the carrier tracking loop. The cryptographic unit 19 can also provide inputs to the PN code generator 24 if needed.

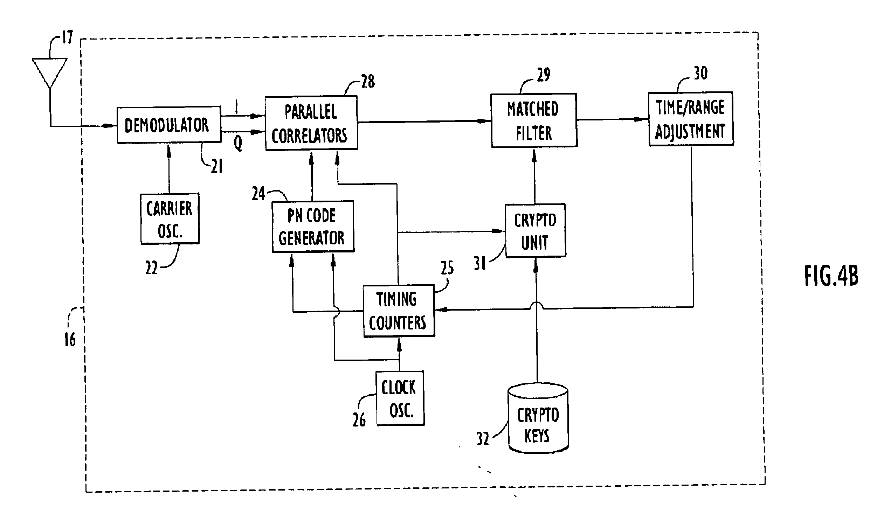

Since the tracking mode can only handle small timing errors, the receiver must first use the acquisition mode to acquire correct timing. A receiver configured to operate in an acquisition mode is shown in Fig. 4B. Here, many of the same components used for the tracking mode are shown for use in the acquisition mode. However, when operating in an acquisition mode many parallel correlators are used to try many possible timings at the same time. The timing counters are not set correctly, but simply define an initial reference for identifying all of the timing possibilities. Generally one (perhaps two) of the correlators will have nearly correct timing, recognized by having the strongest output(s). When the correct timing is confirmed, the timing counters are set correctly for the tracking mode.

In the acquisition mode, the correlation is performed is two stages. In the first stage, performed by a parallel correlator unit 28, shown in Fig. 4B, that has many correlators for use in acquiring the signal, the signal is correlated over a span of individual power pulses. In the second stage, performed by a matched filter 29, these short correlations are summed, using delays that match the random intervals between the power pulses. In Fig. 4B a cryptographic unit 31, using keys stored in a cryptographic storage unit 32, is connected to the matched filter 29 and is used to set these delays, using the same random values used in the transmitter. The cryptographic unit 31 also can provide inputs to the PN code generator 24 if needed.

### Acquisition Strategy

Suppose the receiver's initial time uncertainty is no more than plus or minus 10 seconds. The receiver's acquisition strategy begins by using the same pulse timing as for the transmitter. Given the current time of day plus 10 seconds, the pulse timing, which can be represented as a list of pulse start times, covering a correlation span is generated. The correlation span is the portion of the signal that the receiver will seek to detect. In a similar fashion, the PN subsequences of the code during the pulse intervals indicated by the list of pulse start times is also generated. This data is used to configure the correlator circuits, described below in more detail, preparing it to detect this portion of the signal, which according to the receiver's timing, is 10 seconds in the future.

If the receiver's timing error is 10 seconds late, then the correlator will detect the signal immediately (looking early compensates for its lateness); but if set 10 seconds early, will detect it after searching for 20 seconds. For all errors within the uncertainty range, the signal will be found sometime in the 20-second search.

### Correlator Structure

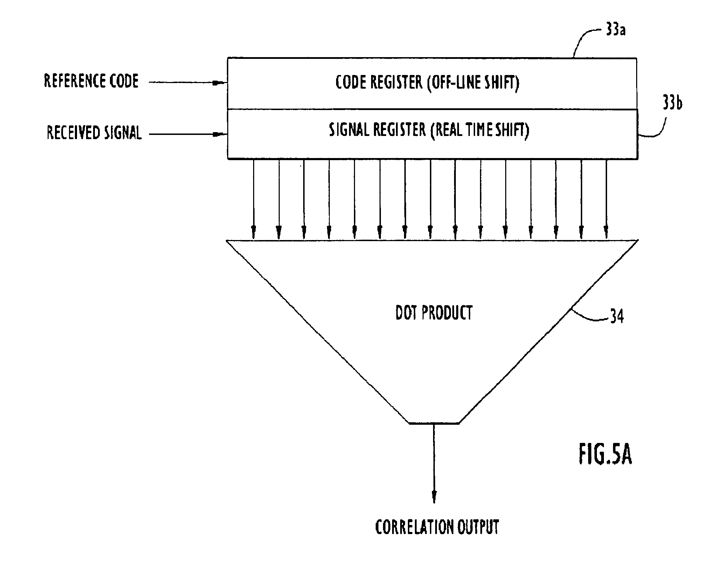

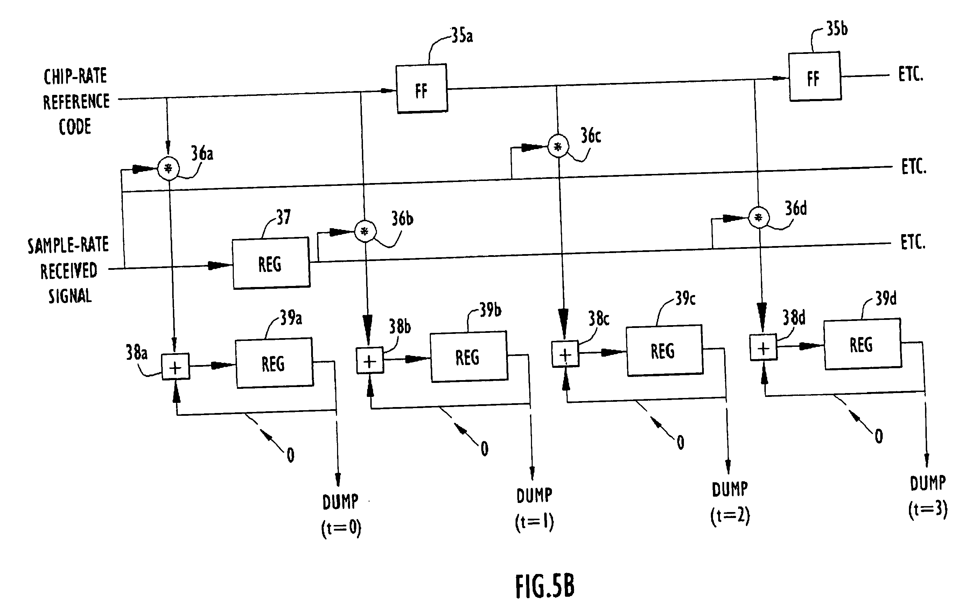

The correlator used to detect a portion of the code repeatedly computes dot products, each one being a dot product of a subsequence of recent signal samples and a subsequence of the code to be detected. The dot product (correlation) becomes large when the two subsequences align and match well. Two types of correlators that can be used in the parallel correlators 23 use different methods of alignment. A matched-filter type of correlator is shown in Fig. 5A and a parallel-active type of correlator is shown in Fig. 5B.

The matched filter type of correlator shown in Fig. 5A includes a code register 33a that receives a reference code and performs an off-line shift, a signal register 33b that receives the received signal and performs a real-time shift, and a dot product unit 34 that performs a dot product operation on its inputs. The contents of the code and signal registers are input to the dot product unit that performs the dot product operation on the inputs and outputs a correlation result.

As shown in Fig. 5B, the parallel-active type of correlator shown in Fig. 5B includes flip-flops 35a and 35b, multipliers 36a through 36d, a register 37, adders 38a through 38d, and registers 39a through 39d that are dumped to produce correlation outputs corresponding to different times (e.g., time t=0, t=1, etc.). Each output circuit includes a register (e.g., register 39a) receiving an input from an adder (e.g., 38a) that adds the output of the register with an output of a multiplier (e.g., multiplier 36a). When the register dumps a "0" is inserted into the adder (e.g., 38a) at the appropriate time to, in essence, reset the accumulation. The multiplier multiplies a received signal at the sample rate with a reference code at the chip rate. The flip-flops delay the reference code or the received signal for an appropriate amount of time for the corresponding correlation result. A multiplexer (not shown) can be used to multiplex the values dumped from the registers at different times.

### Detecting a Pulse

To coherently detect one pulse, either type of correlator can be used equal in size to the width of the pulse. For example, to detect one pulse in the staggered pulse signal using the matched filter type correlator the correlator's code register 33a holds as many chips as in the pulse, and signal register 33b holds as many samples as in the pulse. To detect one pulse in the staggered pulse signal using the parallel-active type correlator the correlator's code register (i.e., flip-flops 35a, 35b, etc.) holds as many chips as in the pulse. However, the signal register (i.e., register 37) holds as many samples as in a chip, as opposed to the number of samples in a pulse as in the matched-filter type of correlator. For the parallel-active style correlator, the code register should be rotated after it is initially filled, and each sum dumped and reset after it receives the last chip. In this way, both styles can search for a given pulse for a time equal to the span of the time uncertainty.

### Detecting Multiple Code Pulses

To coherently detect multiple randomly spaced pulses, either type of correlator can be used, with the receiver configured with one correlator for each pulse. To noncoherently sum the individual pulse correlations into one stronger correlation, these correlators are strung together with variable-delay memories that are configured with delays matching the random intervals between the pulses. Here, more differences between the correlator styles are noted.

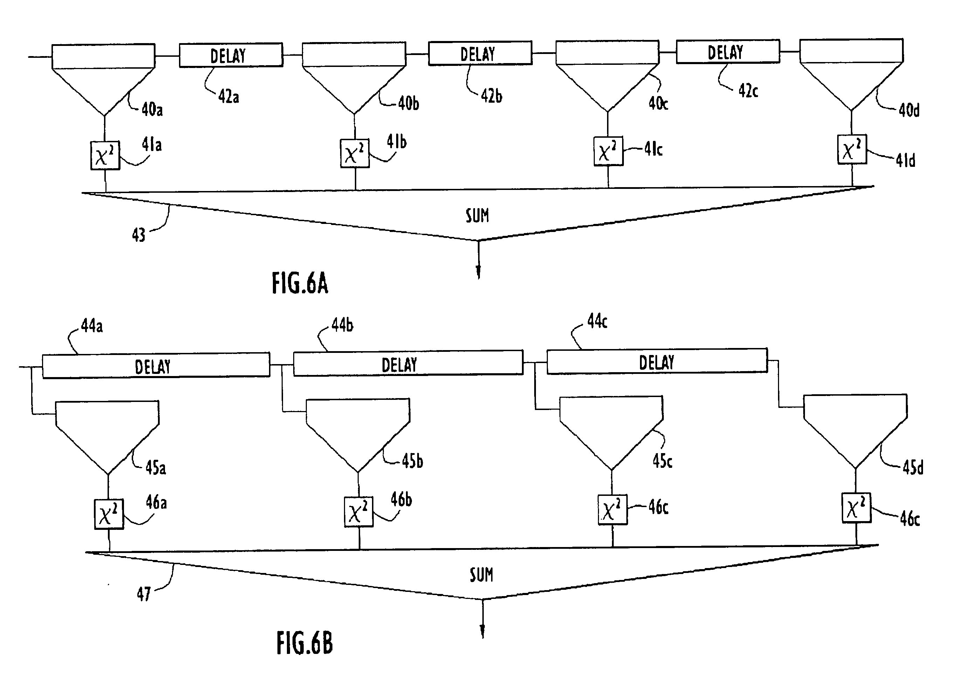

When using the matched-filter correlators, advantage is taken of the fact that the signal register of each pulse-detection correlator delays the signal for the width of the pulse. Variable delays set to the intervals between pulses are used, as illustrated in Figs. 6A and 6B. Fig. 6A shows a receiver configured with matched-filter correlators for detecting a pulsed code. In Fig. 6A matched-filter correlators 40a through 40d are connected with delay units 42a through 42d disposed between the correlators. For a noncoherent sum of the pulse correlations, the vector outputs of the correlators are squared (to compute I² + Q²) by squaring units 41a through 41b that square the correlation outputs. The squared correlation outputs are summed using an adder 43 to produce a detection signal. Only the signal path is shown in Fig. 6A.

However, when using the parallel-active type correlators, the signal registers do not have any substantial delay. Each variable delay is set to the interval from the start of one pulse to the start of the next pulse, as shown in Fig. 6B. In Fig. 6B variable delay units 44a through 44c receive the signal and delay it according to their set delay values. Parallel-active type correlators 45c through 45d receive the delayed signal, corresponding the corresponding interval between pulses, and produce a correlation result that can be squared by square units 46a through 46d. The squared correlation results are summed by an adder 47 to produce a detection signal.

It will also be understood that many of the elements shown in the transmitter illustrated in Figs. 3A-B and the receiver illustrated in Figs. 4A-B can be implemented in hardware, software or firmware.

### Applications

A staggered pulse acquisition system is applicable for significantly improving A/J for the military code for the next generation of GPS. It is also generally applicable for improving interference immunity, in general, for spread spectrum communications and radar systems.

Having described embodiments of a staggered pulse signal, and methods and apparatuses for transmitting and receiving such a signal, it is believed that other modifications, variations and changes will be suggested to those skilled in the art in view of the teachings set forth herein. It is therefore to be understood that all such variations, modifications and changes are believed to fall within the scope of the present invention as defined by the appended claims. Although specific terms are employed herein, they are used in their ordinary and accustomed manner only, unless expressly defined differently herein, and not for purposes of limitation.

## Claims

1. A method of transmitting a signal, comprising:
generating a sequence of pseudorandom noise chips at a base power level;
amplifying a sequence of groups of said chips to a higher power level than chips not in the group so that successive ones of said groups of chips are separated by a time interval whose duration is controlled by a cryptographic sequence that is known to the transmitter and the receiver of the signal, and wherein the durations of the time intervals between successive groups represents synchronization information for said signal, which synchronization information is used to provide the receiver with information over the time of occurrence of the higher power chips.

2. A method of receiving a signal, comprising:
receiving a sequence of pseudorandom noise chips comprising a first group of chips at an increased power level relative to a base power level interspersed with a second group of chips at the base power level, wherein the duration of the time intervals between successive ones of said first groups of chips is controlled by a cryptographic sequence that is known to the transmitter and the receiver of the signal and represents synchronization information for the signal , which synchronization information is used to provide the receiver with information over the time of occurrence of the higher power chips;
detecting only the first group chips;
determining durations of time intervals between successive ones of the first groups of chips; and
acquiring synchronization to the signal based on said durations.

3. **A** transmitter (5) suitable for transmitting a staggered pulse signal, comprising:
code generator means (6, 7, 8) for generating a plurality of chips according to a code;
means (10) for generating a cryptographical sequence based on a cryptographical key; and
amplifier means (9) for amplifying a sequence of groups of the chips to a higher voltage level than pulses not in said groups, so that successive ones of said groups of chips are separated by a time interval whose duration is controlled by said cryptographic sequence that is known to the transmitter and the receiver of the signal, and wherein the durations of the time intervals between said successive groups represents synchronization information for said signal, which synchronization information is used to provide the receiver with information over the time of occurrence of the higher power chips.

4. A receiver (16) for receiving a staggered pulse signal having high-power pulses of a code separated by intervals according to a cryptographic algorithm, the receiver comprising:
means (19, 20) for generating a cryptographic sequence corresponding to the cryptographic algorithm;
code detection means for detecting a timing of the received staggered pulse signal that comprises a sequence of a group of chips at a higher power than chips not in said group such that successive ones of said groups of pulses are separated by a time interval that is a time interval whose duration is controlled by a cryptographic sequence that is known to the transmitter and the receiver of the signal, wherein the durations of the time intervals between successive groups represents synchronization information for said signal, which synchronization information is used to provide the receiver with information over the time of occurrence of the higher power chips , and wherein the code detection means detects the time intervals between said successive groups of higher power chips and thereby acquire synchronization to the staggered pulse signal.

5. The receiver of claim 4, wherein said code detection means comprises:
means (34) for correlating the received staggered pulse signal to output a correlation signal; and
decoder means for detecting the correlation signal using said cryptographic sequence.

6. The receiver of claim 5, wherein said code detection means comprises filter means for detecting time intervals between the higher power pulses of the received signal.

7. The receiver of claim 4, wherein the code of the staggered pulse signal is a pseudorandom noise (PN) code.

## Patentansprüche

1. Verfahren zum Übertragen eines Signals, wobei das Verfahren umfasst:
Erzeugen einer Sequenz von Pseudozufallsrauschen-Chips mit einem Grundleistungspegel;
Verstärken einer Sequenz von Gruppen der Chips auf einen höheren Leistungspegel als Chips nicht in der Gruppe, sodass Aufeinanderfolgende der Gruppen von Chips durch ein Zeitintervall, dessen Dauer durch eine kryptographische Sequenz gesteuert wird, die dem Sender und dem Empfänger des Signals bekannt ist, getrennt sind, und wobei die Dauern der Zeitintervalle zwischen aufeinanderfolgenden Gruppen Synchronisationsinformationen für das Signal repräsentieren, wobei die Synchronisationsinformationen dazu verwendet werden, an den Empfänger Informationen über die Zeit des Auftretens der Chips mit höherer Leistung zu liefern.

2. Verfahren zum Empfangen eines Signals, wobei das Verfahren umfasst:
Empfangen einer Sequenz von Pseudozufallsrauschen-Chips, die eine erste Gruppe von Chips mit einem erhöhten Leistungspegel relativ zu einem Grundleistungspegel, die mit einer zweiten Gruppe von Chips mit dem Grundleistungspegel durchsetzt sind, umfasst, wobei die Dauer der Zeitintervalle zwischen Aufeinanderfolgenden der ersten Gruppen von Chips durch eine kryptographische Sequenz gesteuert wird, die dem Sender und dem Empfänger des Signals bekannt ist und die Synchronisationsinformationen für das Signal repräsentiert, wobei die Synchronisationsinformationen dazu verwendet werden, an den Empfänger Informationen über den Zeitpunkt des Auftretens der Chips mit höherer Leistung zu liefern;
Detektieren nur der Chips der ersten Gruppe;
Bestimmen der Dauern der Zeitintervalle zwischen Aufeinanderfolgenden der ersten Gruppen von Chips; und
Erwerben der Synchronisation mit dem Signal auf der Grundlage der Dauern.

3. Sender (5), der zum Senden eines gestaffelten Impulssignals geeignet ist, wobei der Sender umfasst:
ein Codegeneratormittel (6, 7, 8) zum Erzeugen mehrerer Chips in Übereinstimmung mit einem Code;
ein Mittel (10) zum Erzeugen einer kryptographischen Sequenz auf der Grundlage eines kryptographischen Schlüssels; und
ein Verstärkermittel (9) zum Verstärken einer Sequenz von Gruppen der Chips mit einen höheren Spannungspegel als Impulse nicht in den Gruppen, sodass Aufeinanderfolgende der Gruppen von Chips durch ein Zeitintervall getrennt sind, dessen Dauer durch die kryptographische Sequenz gesteuert wird, die dem Sender und dem Empfänger des Signals bekannt ist, und wobei die Dauern der Zeitintervalle zwischen den aufeinanderfolgenden Gruppen Synchronisationsinformationen für das Signal repräsentieren, wobei die Synchronisationsinformationen dazu verwendet werden, an den Empfänger Informationen über den Zeitpunkt des Auftretens der Chips mit höherer Leistung zu liefern.

4. Empfänger (16) zum Empfangen eines gestaffelten Impulssignals mit Impulsen hoher Leistung eines Codes, die durch Intervalle in Übereinstimmung mit einem kryptographischen Algorithmus getrennt sind, wobei der Empfänger umfasst:
ein Mittel (19, 20) zum Erzeugen einer kryptographischen Sequenz, die dem kryptographischen Algorithmus entspricht;
ein Codedetektierungsmittel zum Detektieren einer Zeiteinstellung des empfangenen gestaffelten Impulssignals, das eine Sequenz einer Gruppe von Chips mit einer höheren Leistung als Chips nicht in der Gruppe umfasst, sodass Aufeinanderfolgende der Gruppen von Impulsen durch ein Zeitintervall getrennt sind, das ein Zeitintervall ist, dessen Dauer durch eine kryptographische Sequenz gesteuert wird, die dem Sender und dem Empfänger des Signals bekannt ist, wobei die Dauern der Zeitintervalle zwischen aufeinanderfolgenden Gruppen Synchronisationsinformationen für das Signal repräsentieren, wobei die Synchronisationsinformationen dazu verwendet werden, an den Empfänger Informationen über den Zeitpunkt des Auftretens der Chips mit höherer Leistung zu liefern, und wobei das Codedetektierungsmittel die Zeitintervalle zwischen den aufeinanderfolgenden Gruppen von Chips mit höherer Leistung detektiert und dadurch die Synchronisation mit dem gestaffelten Impulssignal erwirbt.

5. Empfänger nach Anspruch 4, bei dem das Codedetektierungsmittel umfasst:
ein Mittel (34) zum Korrelieren des empfangenen gestaffelten Impulssignals zum Ausgeben eines Korrelationssignals; und
ein Decodierermittel zum Detektieren des Korrelationssignals unter Verwendung der kryptographischen Sequenz.

6. Empfänger nach Anspruch 5, bei dem das Codedetektierungsmittel ein Filtermittel zum Detektieren von Zeitintervallen zwischen den Impulsen mit höherer Leistung des Empfangssignals umfasst.

7. Empfänger nach Anspruch 4, bei dem der Code des gestaffelten Impulssignals ein Pseudozufallsrauschen-Code (PN-Code) ist.

## Revendications

1. Procédé de transmission d'un signal comprenant:
la génération d'une séquence de fines impulsions de bruit pseudo aléatoire à un niveau de puissance de base;
l'amplification d'une séquence de groupes des dites fines impulsions à un niveau de puissance plus élevé que les fines impulsions qui ne sont pas dans le groupe de sorte que celles successives des fines impulsions des dits groupes de fines impulsions sont séparées d'un intervalle de temps dont la durée est commandée par une séquence cryptographique qui est connue du transmetteur et du récepteur de signal, et dans lequel les durées des intervalles de temps entre les groupes successifs représentent l'information de synchronisation du dit signal, laquelle information de synchronisation est utilisée pour fournir au récepteur l'information sur la date d'occurrence des fines impulsions de puissance plus élevée.

2. Procédé de réception d'un signal, comprenant:
la réception d'une séquence de fines impulsions de bruit pseudo aléatoire comprenant un premier groupe de fines impulsions à un niveau de puissance augmenté relativement à un niveau de puissance de base entrecoupés par un second groupe de fines impulsions au niveau de la puissance de base dans lequel la durée des intervalles de temps entre celles successives des fines impulsions des dits premiers groupes de fines impulsions est commandée par une séquence cryptographique qui est connue du transmetteur et du récepteur de signal et représente l'information de synchronisation du signal, laquelle information de synchronisation est utilisée pour fournir au récepteur l'information sur la date d'occurrence des fines impulsions de puissance plus élevée;
la détection de fines impulsions du seul premier groupe;
la détermination des durées des intervalles de temps entre celles successives de fines impulsions des premiers groupes de fines impulsions; et
l'acquisition de la synchronisation du signal sur la base desdites durées.

3. Transmetteur (5) convenant à la transmission de signaux impulsionnels décalés, comprenant:
des moyens générateur de code (6, 7, 8) pour générer une pluralité de fines impulsions en fonction d'un code;
des moyens (10) pour générer une séquence cryptographique basée sur une clé cryptographique; et
des moyens amplificateur (9) pour amplifier une séquence de groupes de fines impulsions vers un niveau de tensions plus élevées que les fines impulsions des dits groupes de sorte que celles successives des fines impulsions des dits groupes de fines impulsions sont séparées d'un intervalle de temps dont la durée est commandée par la séquence cryptographique qui est connue du transmetteur et de l'émetteur de signal et
dans lequel les durées des intervalles de temps entre les dits groupes successifs représentent l'information de synchronisation pour le dit signal, laquelle information de synchronisation est utilisée pour fournir au récepteur l'information sur la date d'occurrence des fines impulsions de puissance plus élevée.

4. Récepteur (16) pour recevoir un signal impulsionnel décalé comprenant des impulsions de forte puissance séparées par des intervalles selon un algorithme cryptographique, le récepteur comprenant:
des moyens (19, 20) pour générer une séquence cryptographique correspondant à l'algorithme cryptographique;
des moyens de détection de codes pour détecter une chronologie du signal impulsionnel décalé reçu qui comporte une séquence des groupes de fines impulsions à une puissance plus élevée que les fines impulsions qui ne sont pas dans ledit groupe de sorte que celles successives des fines impulsions des dits groupes de fines impulsions sont séparées d'un intervalle de temps dont la durée est commandée par une séquence cryptographique qui est connue du transmetteur et du récepteur de signal dans lequel les durées des intervalles de temps entre les groupes successifs représentent l'information de synchronisation pour le dit signal, laquelle information de synchronisation est utilisée pour fournir au récepteur l'information sur la date d'occurrence des fines impulsions de puissance plus élevée, et dans lequel les moyens de détection de code détectent les intervalles de temps entre les dits groupes successifs de fines impulsions de puissance plus élevée et de ce fait acquièrent la synchronisation sur le signal impulsionnel décalé.

5. Récepteur selon la revendication 4, dans lequel les dits moyens de détection de code comportent:
des moyens (34) pour corréler le signal impulsionnel décalé reçu pour sortir un signal de corrélation; et
des moyens de décodage pour détecter le signal de corrélation en utilisant la dite séquence cryptographique.

6. Récepteur selon la revendication 5, dans lequel lesdits moyens de détection de code comportent des moyens de filtrage pour détecter les intervalles de temps entre les impulsions de puissance plus élevée du signal reçu.

7. Récepteur selon la revendication 4, dans lequel le code du signal impulsionnel décalé est un code à bruit pseudoaléatoire (PN).
